# EUROPÄISCHE PATENTANMELDUNG

(11) **EP 1 721 791 A2**
(43) Veröffentlichungstag der Anmeldung: **15.11.2006**
(21) Anmeldenummer: 06009145.1
(22) Anmeldetag: 03.05.2006
(51) Int. Cl.: B60R 22/44

(54) **Gurtaufroller mit reversiblem Gurtstrafferantrieb**

(30) Priorität: 09.05.2005 DE 102005021283
(71) Anmelder: TRW Automotive GmbH, 73553 Alfdorf (DE)
(72) Erfinder: Holbein, Wolfgang, 73553 Alfdorf (DE)
(74) Vertreter: Strass, Jürgen

(57) **Zusammenfassung**

Ein Gurtaufroller (10) für ein Kraftfahrzeug umfaßt ein Aufrollergehäuse (12) und eine im Aufrollergehäuse (12) drehbar gelagerte Gurtspule (14) für einen Sicherheitsgurt. Die Gurtspule (14) hat eine erste Seite und eine entgegengesetzte Sperrseite. Der Gurtaufroller (10) umfaßt ferner einen an der Sperrseite der Gurtspule (14) wirkenden Blockiermechanismus und einen reversiblen Gurtstrafferantrieb, der die Gurtspule (14) in einer Richtung zum Aufwickeln des Sicherheitsgurts antreiben kann. Der reversible Gurtstrafferantrieb ist an die Sperrseite der Gurtspule (14) gekoppelt.

## Beschreibung

Die Erfindung betrifft einen Gurtaufroller für ein Kraftfahrzeug, mit einem Aufrollergehäuse, einer im Aufrollergehäuse drehbar gelagerten Gurtspule für einen Sicherheitsgurt, die eine erste Seite und eine entgegengesetzte Sperrseite hat, einem an der Sperrseite der Gurtspule wirkenden Blockiermechanismus und einem reversiblen Gurtstrafferantrieb, der die Gurtspule in einer Richtung zum Aufwickeln des Sicherheitsgurts antreiben kann.

Ein reversibler Gurtstrafferantrieb weist in der Regel einen Elektromotor auf, der in einer Gefahrensituation die Gurtspule so antreiben kann, daß der Sicherheitsgurt aufgewickelt wird. Auf diese Weise kann zum einen die sogenannte Gurtlose bereits vor einem Unfall beseitigt werden. Zum anderen kann der Fahrzeuginsasse, wenn er sich z.B. in einer vorgebeugten Position befindet, in eine aufrechte Position zurückgezogen werden. Sobald die Gefahrensituation vorbei ist, gibt der Gurtstrafferantrieb die Gurtspule wieder frei, so daß der Gurtaufroller zu seiner herkömmlichen Funktionsweise zurückkehrt.

Kommt es nach dem Aktivieren des Gurtstrafferantriebs zu einem Unfall, zieht der Fahrzeuginsasse Sicherheitsgurt von der Gurtspule ab. Dies liegt zum einen daran, daß die Gurtspule um einen bestimmten Betrag in der Abwickelrichtung des Sicherheitsgurts gedreht werden muß, bis der Blockiermechanismus anspricht. Die Drehung der Gurtspule in Abwickelrichtung kann aber auch auf das Vorhandensein einer Kraftbegrenzungseinrichtung zurückzuführen sein, die eine kontrollierte Rückdrehung der Gurtspule ermöglicht, wenn besonders hohe Kräfte im Sicherheitsgurt wirken.

Damit sich das Blockier- oder Bremsmoment des reversiblen Gurtstrafferantriebs während der Kraftbegrenzung nicht unkontrolliert auf das Kraftniveau aufsattelt und um eine mögliche Beschädigung des reversiblen Gurtstrafferantriebs zu vermeiden, ist bei dem aus der DE 203 15 870 U1 bekannten gattungsgemäßen Gurtaufroller ein zwischen dem Gurtstrafferantrieb und der Gurtspule wirksamer Drehmomentbegrenzer nach Art einer Rutschkupplung vorgesehen. Je nachdem, ob der reversible Gurtstrafferantrieb a) nicht eingekuppelt, b) eingekuppelt, aber unbestromt, oder c) eingekuppelt und bestromt ist, würde nämlich sonst der reversible Gurtstrafferantrieb der Kraftbegrenzung a) nicht, b) wenig oder c) stark entgegenwirken.

Soll ein Gurtaufroller mit reversiblem Gurtstrafferantrieb zusätzlich mit einem pyrotechnischen Straffer zur Durchführung einer Notfallstraffung ausgestattet werden, kommt eine weitere Problematik hinzu. Im Falle der Aktivierung des pyrotechnischen Straffers müßte der reversible Gurtstrafferantrieb grundsätzlich deaktiviert werden, um eine zuverlässige Notfallstraffung zu gewährleisten. Eine Kombination eines reversiblen Gurtstrafferantriebs mit einem pyrotechnischen Straffer erfordert demzufolge einen hohen Entwicklungsaufwand.

Die Erfindung schafft einen Gurtaufroller mit reversiblem Gurtstrafferantrieb, der ohne besondere Kompensationsmaßnahmen zur Vermeidung der oben genannten Probleme auskommt.

Gemäß der Erfindung ist bei einem Gurtaufroller der eingangs genannten Art vorgesehen, daß der reversible Gurtstrafferantrieb an die Sperrseite der Gurtspule gekoppelt ist. Die Erfindung geht von der Erkenntnis aus, daß die eingangs genannten Probleme durch die bei herkömmlichen Gurtaufrollern übliche Anbindung der Funktionseinheiten bedingt ist. Bislang wurde der reversible Gurtstrafferantrieb an die der Sperrseite entgegengesetzte Seite der Gurtspule gekoppelt, d.h. an die Seite, an der ansonsten auch die Triebfeder und gegebenenfalls der pyrotechnische Straffer angreifen. Beim erfindungsgemäßen Gurtaufroller treibt der reversible Gurtstrafferantrieb dagegen die Sperrseite der Gurtspule an. Der erfindungsgemäße Gurtaufroller hat den Vorteil, daß der reversible Gurtstrafferantrieb unabhängig von der Triebfeder und gegebenenfalls vom pyrotechnischen Straffer ist, so daß eine Drehmoment- oder Überlastbegrenzung nicht erforderlich ist. Die Problematik einer Beeinflussung der Kraftbegrenzung des Gurtaufrollers durch den Zustand des reversiblen Gurtstrafferantriebs wird durch die erfindungsgemäße Konstruktion grundsätzlich vermieden. Für die verschiedenen Funktionseinheiten des Gurtaufrollers, wie Blockiermechanismus, pyrotechnischer Straffer und Kraftbegrenzungseinrichtung, können Standardkomponenten verwendet werden. Die Trennung des reversiblen Gurtstrafferantriebs von der der Sperrseite entgegengesetzten Seite der Gurtspule ermöglicht prinzipiell den Einsatz eines reversiblen Gurtstrafferantriebs in verschiedenen Gurtaufrollerkonzepten. Außerdem kann auf die Entwicklung verschiedener elektronischer Steuereinheiten für den Gurtaufroller verzichtet werden, da die Anbindung an den Motor und das Aufrollergehäuse bei verschiedenen Gurtaufrollertypen identisch sind.

Gemäß der bevorzugten Ausführungsform der Erfindung umfaßt der Gurtaufroller eine Kraftbegrenzungseinrichtung, und der reversible Gurtstrafferantrieb ist zwischen der Sperrseite der Gurtspule und der Kraftbegrenzungseinrichtung vorgesehen. Die Lage des reversiblen Gurtstrafferantriebs ist dabei nicht unbedingt örtlich, sondern funktional zu verstehen.

Vorzugsweise weist die Kraftbegrenzungseinrichtung einen Torsionsstab auf, dessen eines Ende auf der ersten Seite der Gurtspule und dessen anderes Ende in einem Bauteil des Gurtaufrollers gelagert ist, das bei aktiviertem Blockiermechanismus gehäusefest gehalten wird.

Der Blockiermechanismus ist bei der bevorzugten Ausführungsform fahrzeug- und/oder gurtbandsensitiv und weist einen drehfest an die Gurtspule gekoppelten Klinkenträger mit einer Blockierklinke auf, die in eine gehäusefeste Sperrverzahnung einsteuerbar ist.

Ein vorteilhafter Aufbau des erfindungsgemäßen Gurtaufrollers ergibt sich dadurch, daß die Sperrverzahnung an einem gehäusefest angebrachten Bauteil des reversiblen Gurtstrafferantriebs befestigt ist.

Gemäß einer besonders vorteilhaften Umsetzung des Erfindungsgedankens weist der reversible Gurtstrafferantrieb wenigstens eine Einsteuerklinke auf, die in ein verzahntes Bauteil einsteuerbar ist, welches wiederum bei aktiviertem Blockiermechanismus gehäusefest gehalten wird.

Der erfindunsgemäße Gurtaufroller kann eine Triebfeder, oder eine Triebfeder und einen pyrotechnischen Straffer umfassen, die an die erste Seite der Gurtspule gekoppelt ist/sind.

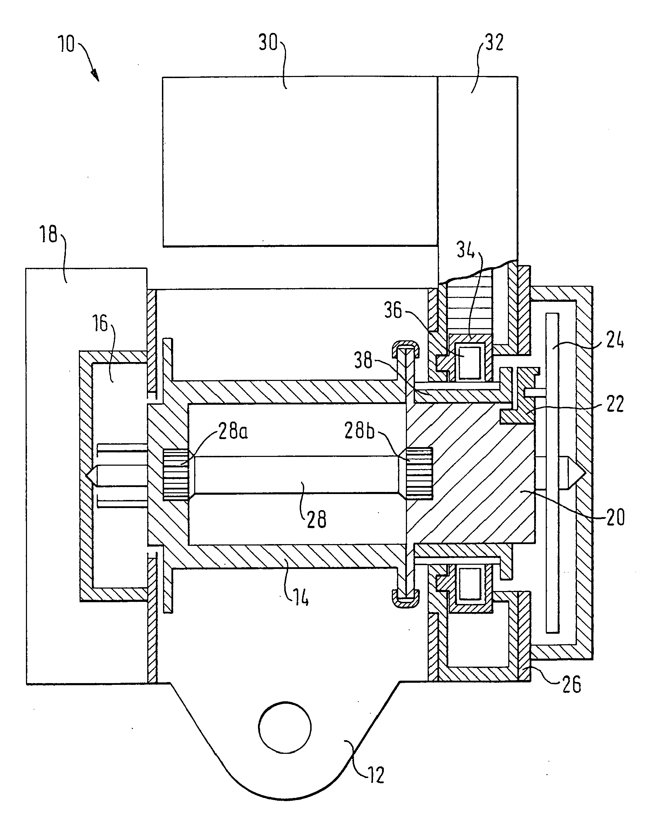

Weitere Merkmale und Vorteile der Erfindung ergeben sich aus der nachfolgenden Beschreibung der bevorzugten Ausführungsform unter Bezugnahme auf die beigefügte Zeichnung. In der Zeichnung zeigt die einzige Figur schematisch eine Schnittansicht eines erfindungsgemäßen Gurtaufrollers.

Der in der Figur dargestellte Gurtaufroller 10 für ein Kraftfahrzeug umfaßt eine drehbar in einem Aufrollergehäuse 12 gelagerte Gurtspule 14, auf der ein Teil eines Sicherheitsgurts aufgewickelt ist. Durch Drehung der Gurtspule 14 in eine erste Richtung wird Gurtband aufgewickelt (Aufwickelrichtung), durch Drehung in eine zweite Richtung wird Gurtband abgewickelt (Abwickelrichtung).

An einer ersten Seite der Gurtspule 14 greift eine Triebfeder 16 an, die den Sicherheitsgurt in Aufwickelrichtung vorspannt. Auf derselben Seite ist auch ein pyrotechnischer Straffer 18 angeordnet, mit dem eine Notfallstraffung durchgeführt werden kann. Der pyrotechnische Straffer 18 ist an die erste Seite der Gurtspule 14 gekoppelt und kann die Gurtspule 14 bei Bedarf schlagartig um einen bestimmten Drehwinkel in Aufwickelrichtung drehen.

Auf der der ersten Seite entgegengesetzten Sperrseite der Gurtspule 14 weist der Gurtaufroller einen Blockiermechanismus mit einem mit der Gurtspule 14 drehfest verbundenen Klinkenträger 20, einer Blockierklinke 22, einer Kupplungsscheibe 24 und einer gehäusefesten Sperrverzahnung 26 auf. Der Blockiermechanismus wird fahrzeug- und/oder gurtbandsensitiv aktiviert und blockiert durch ein Einsteuern der Sperrklinke 22 in die Sperrverzahnung 26 eine Drehung der Gurtspule 14.

Der Gurtaufroller 10 umfaßt ferner eine Kraftbegrenzungseinrichtung mit einem Torsionsstab 28, dessen eines Ende 28a auf der ersten Seite in der Gurtspule 14 und dessen anderes Ende 28b im sperrseitigen Klinkenträger 20 gelagert ist. Bei aktiviertem Blockiermechanismus ist der Klinkenträger 20 zwar an einer Drehung in Abwickelrichtung gehindert; eine Drehung der Gurtspule 14 in Abwickelrichtung ist aber unter Tordierung des Torsionsstabs 28 möglich, wenn besonders hohe Kräfte im Sicherheitsgurt wirken.

Die Details der oben genannten Funktionseinheiten des Gurtaufrollers 10 sind dem Fachmann bekannt und für die vorliegende Erfindung von untergeordneter Bedeutung, so daß hier nicht näher darauf eingegangen werden muß.

Der Gurtaufroller 10 ist mit einem resersiblen Gurtstrafferantrieb ausgestattet, der sich aus einem Elektromotor 30, einem Getriebe 32, einer Kupplung 34, Einsteuerklinken 36 und einem Zahnring 38 zusammensetzt. Der Zahnring 38 ist drehfest auf den Klinkenträger 20 aufgesetzt, der wiederum drehfest mit der Gurtspule 14 verbunden ist. Die übrigen Komponenten des reversiblen Gurtstrafferantriebs sind am Aufrollergehäuse 12 befestigt, wobei das Gehäuse des Getriebes 32 als Träger der Sperrverzahnung 26 des Blockiermechanismus dient. Bei Bedarf kuppeln die Einsteuerklinken 36 in den Zahnring 38 ein, damit der Elektromotor 30 die Gurtspule 14 antreiben kann.

Von besonderer Bedeutung ist, daß der Zahnring 38 durch seine Verbindung mit dem Klinkenträger 20 ein Bindeglied zwischen dem reversiblen Gurtstrafferantrieb und dem Blockiermechanismus darstellt. Bei Aktivierung des Blockiermechanismus steuert die Sperrklinke 22 in die Sperrverzahnung 26 ein, die die eingeleitete Kraft über das Getriebegehäuse auf das Aufrollergehäuse 12 überträgt.

Kommt es nun bei blockierter Gurtspule 14 zu einem Gurtbandabzug aufgrund besonders hoher Kräfte im Sicherheitsgurt, so ist das Niveau der Kraftbegrenzung alleine durch den Torsionsstab 28 bestimmt, d.h. insbesondere unabhängig vom Betriebszustand des reversiblen Gurtstrafferantriebs. Dies ist darauf zurückzuführen, daß der reversible Gurtstrafferantrieb im eingekuppelten Zustand bei bestromtem Elektromotor 30 zwar über die Einsteuerklinken 36 am Zahnring 38 angreifen kann, der Zahnring 38 aber aufgrund der Blockierung des Klinkenträgers 20 die Antriebskräfte über die Sperrverzahnung 26 ohne Wirkung an das Aufrollergehäuse 12 weitergibt.

## Patentansprüche

1. Gurtaufroller (10) für ein Kraftfahrzeug, mit
einem Aufrollergehäuse (12),
einer im Aufrollergehäuse (12) drehbar gelagerten Gurtspule (14) für einen Sicherheitsgurt, die eine erste Seite und eine entgegengesetzte Sperrseite hat,
einem an der Sperrseite der Gurtspule (14) wirkenden Blockiermechanismus, und
einem reversiblen Gurtstrafferantrieb, der die Gurtspule (14) in einer Richtung zum Aufwickeln des Sicherheitsgurts antreiben kann,
**dadurch gekennzeichnet, daß**
der reversible Gurtstrafferantrieb an die Sperrseite der Gurtspule (14) gekoppelt ist.

2. Gurtaufroller nach Anspruch 1, **dadurch gekennzeichnet, daß** der Gurtaufroller (10) eine Kraftbegrenzungseinrichtung umfaßt und der reversible Gurtstrafferantrieb zwischen der Sperrseite der Gurtspule (14) und der Kraftbegrenzungseinrichtung vorgesehen ist.

3. Gurtaufroller nach Anspruch 2, **dadurch gekennzeichnet, daß** die Kraftbegrenzungseinrichtung einen Torsionsstab (28) aufweist, dessen eines Ende (28a) auf der ersten Seite der Gurtspule (14) und dessen anderes Ende (28b) in einem Bauteil (20) des Gurtaufrollers (10) gelagert ist, das bei aktiviertem Blockiermechanismus gehäusefest gehalten wird.

4. Gurtaufroller nach einem der vorhergehenden Ansprüche, **dadurch gekennzeichnet, daß** der Blockiermechanismus fahrzeug- und/oder gurtbandsensitiv ist und einen drehfest an die Gurtspule (14) gekoppelten Klinkenträger (20) mit einer Blockierkline (22) aufweist, die in eine gehäusefeste Sperrverzahnung (26) einsteuerbar ist.

5. Gurtaufroller nach Anspruch 4, **dadurch gekennzeichnet, daß** die Sperrverzahnung (26) an einem gehäusefest angebrachten Bauteil (32) des reversiblen Gurtstrafferantriebs befestigt ist.

6. Gurtaufroller nach einem der vorhergehenden Ansprüche, **dadurch gekennzeichnet, daß** der reversible Gurtstrafferantrieb wenigstens eine Einsteuerklinke (36) aufweist, die in ein verzahntes Bauteil (38) einsteuerbar ist, welches wiederum bei aktiviertem Blockiermechanismus gehäusefest gehalten wird.

7. Gurtaufroller nach einem der vorhergehenden Ansprüche, **dadurch gekennzeichnet, daß** der Gurtaufroller (10) eine Triebfeder (16), oder eine Triebfeder (16) und einen pyrotechnischer Straffer (18) umfaßt, die an die erste Seite der Gurtspule (14) gekoppelt ist/sind.
